# EUROPÄISCHE PATENTSCHRIFT

(11) **EP 3 649 020 B1**
(45) Veröffentlichungstag und Bekanntmachung des Hinweises auf die Patenterteilung: **02.06.2021**
(21) Anmeldenummer: 18769311.4
(22) Anmeldetag: 05.09.2018
(51) Int. Cl.: B60R 21/38, E05D 3/14, B33Y 80/00

(54) **SCHWENKGELENK MIT ZUSÄTZLICHEM FREIHEITSGRAD**
PIVOT JOINT HAVING ADDITIONAL DEGREE OF FREEDOM
ARTICULATION PIVOTANTE À DEGRÉ DE LIBERTÉ SUPPLÉMENTAIRE

(30) Priorität: 05.09.2017 DE 102017120422
(43) Veröffentlichungstag der Anmeldung: 13.05.2020
(73) Patentinhaber: EDAG Engineering GmbH, 65205 Wiesbaden (DE); Voestalpine Additive Manufacturing Center GmbH, 40549 Düsseldorf (DE)
(72) Erfinder: HILLEBRECHT, Martin, 36100 Petersberg (DE); BAUM, Fabian, 71083 Herrenberg (DE); RÜDE, Martin, 71272 Renningen (DE); FLÜGEL, Sebastian, 36169 Setzelbach (DE); KLEMP, Eric, 40477 Düsseldorf (DE); CHRISTOFFEL, Jens, 40547 Düsseldorf (DE); LEUDERS, Stefan, 40477 Düsseldorf (DE)
(74) Vertreter: Isarpatent
(86) Internationale Anmeldenummer: PCT/EP2018/073898
(87) Internationale Veröffentlichungsnummer: WO 2019/048498

(56) Entgegenhaltungen:
- EP-A1- 2 384 960
- DE-A1-102014 000 288
- DE-A1-102015 215 695
- DE-A1-102015 219 782

## Beschreibung

Die Erfindung betrifft ein Verbindungselement zum Verbinden eines ersten Bauteils mit wenigstens einem zweiten Bauteil, wobei des Verbindungselement hergerichtet ist, bei einer Belastung oberhalb eines bevorzugt vorgebbaren Grenzwerts unter Beibehaltung der Verbindung zwischen den Bauteilen einen zusätzlichen Freiheitsgrad der Bewegung des Verbindungselements freizugeben.

Aus der EP 2 351 671 A1 ist ein Scharnier zur gelenkigen Anordnung einer Fronthaube an einem Fahrzeug bekannt, mit einem oberen und einem unteren Scharnierflügel, die so miteinander verbunden sind, dass sie im Normalfall nicht relativ zueinander bewegt werden können. Die beiden Scharnierflügel sind mittels einer Verbindung fest verbunden. Im Falle eines Unfalls kann die Verbindung durch eine Trennvorrichtung gelöst werden, so dass die Scharnierflügel sich jetzt relativ zueinander bewegen können.

Die DE 10 2015 215695 A1 beschreibt eine Tankklappe zum Verschließen einer Einfüllöffnung eines Tanks, mit einer Verschlussklappe und einer an der Verschlussklappe angebrachten Scharniereinrichtung mit einer Sollbruchstelle zur schwenkbaren Befestigung der Tankklappe an einer den Tank aufweisenden Vorrichtung.

Es ist eine Aufgabe der Erfindung, zwei oder mehr Bauteile mittels eines Verbindungselements zu verbinden.

Diese Aufgabe wird durch den Gegenstand des Anspruchs 1 gelöst. Vorteilhafte Weiterbildungen des Gegenstands des Anspruchs sind in den abhängigen Ansprüchen, in der Beschreibung und in den Figuren offenbart.

Ein Aspekt der Erfindung betrifft ein Verbindungselement zum Verbinden eines ersten Bauteils mit wenigstens einem zweiten Bauteil. Das Verbindungselement ist zumindest teilweise mittels eines generativen Verfahrens hergestellt. Es ist hergerichtet, bei einer Belastung oberhalb eines bevorzugt vorgebbaren Grenzwerts unter Beibehaltung der Verbindung zwischen den Bauteilen einen zusätzlichen Freiheitsgrad der Bewegung des Verbindungselements oder im Verbindungselement freizugeben.

Das Verbindungselement kann zum Beispiel eine Sollbruchstelle oder eine Losbrechstruktur umfassen, oder mit anderen Worten, an dem Verbindungselement kann eine Position vorgegeben sein, in der bei der vorgegebenen Belastung sich wenigstens zwei miteinander verbundene Verbindungselementteile voneinander lösen, so dass diese wenigstens zwei Verbindungselementteile jetzt, nach dem Losbrechen, relativ zueinander bewegt werden können. Dadurch wird wenigstens ein zusätzlicher Freiheitsgrad der Bewegung für das Verbindungselement zwischen den wenigstens zwei losgebrochenen Verbindungselementteilen geschaffen. Das kann beispielsweise heißen, das nach dem Lösen der ursprünglich steif miteinander verbundenen Verbindungselementteile in oder an der Sollbruchstelle das erste Verbindungselementteil relativ zu dem wenigstens einen zweiten Verbindungselementteil bewegt, linear bewegt, verschwenkt oder verdreht werden kann. Auch eine Kombination der genannten Bewegungen kann nach dem Losbrechen der Losbrechstruktur möglich sein, also zum Beispiel eine lineare Bewegung gefolgt von einer Schwenk- oder Drehbewegung.

Im Folgenden wird die Erfindung meist anhand von zwei miteinander in der Losbrechstruktur verbundenen Verbindungselementteilen erläutert, um die Lesbarkeit der Anmeldung zu erhalten. Die Erfindung betrifft aber auch Verbindungen von drei, vier, fünf und mehr Verbindungselementteilen in einer einzigen Sollbruchstelle, sowie ein erstes Verbindungselementteil, das in einer ersten Sollbruchstelle mit wenigstens einem zweiten Verbindungselementteil, in einer zweiten Sollbruchstelle mit wenigstens einem dritten Verbindungselementteil etc. verbunden ist, wobei für das zweite Verbindungselementteil und alle weiteren Verbindungselementteile das Gleiche gilt, wie für das erste Verbindungselementteil. Im letzten Fall kann jede der Sollbruchstellen einer Sollbruchstelle gemäß dem Aspekt der Erfindung sein.

Das erste Verbindungselementteil und das zweite Verbindungselementteil können im Anfangszustand ein gemeinsames Verbindungselement bilden, bei dem alle Teile nur gemeinsam bewegt werden können. Dies gilt insbesondere für die Richtung der Bewegung und bei einer linearen Bewegung auch für die Bewegungsgeschwindigkeit jedes Punkts auf dem Verbindungselement. Bei einer Schwenk- oder Drehbewegung ist die Geschwindigkeit der Punkte auf dem Verbindungselement bekanntermaßen abhängig von dem Abstand zur Schwenk- oder Drehachse. Das Verbindungselement, bestehend aus dem ersten Verbindungselementteil und wenigstens dem zweiten Verbindungselementteil mit noch nicht gelöster Sollbruchstelle, kann wenigstens in einem Freiheitsgrad bewegt werden, zum Beispiel linear verschoben oder um eine Schwenkachse verschwenkt werden.

Nach dem Losbrechen des ersten Verbindungselementteils von dem zweiten Verbindungselementteil in oder an der Sollbruchstelle bekommt das Verbindungselement wenigstens ein weiterer Freiheitsgrad der Bewegung dazu, dadurch dass jetzt das erste Verbindungselementteil relativ zum zweiten Verbindungselementteil bewegt werden kann. Das Losbrechen der Losbrechstruktur erfolgt bei einer Auslösebelastung, bei der das erste Verbindungselementteil und das zweite Verbindungselementteil verbindenden Losbrechstrukturelemente zum Beispiel verbogen, zusammengedrückt, gedehnt, verdreht, geknickt oder abgeschoren werden.

Gemäß dem Aspekt der Erfindung sind das erste Verbindungselementteil und/oder das zweite Verbindungselementteil und die Losbrechstruktur generativ erzeugt. Insbesondere kann das komplette Verbindungselement mit der Losbrechstruktur gemeinsam mittels des generativen Verfahrens in einem Teil urgeformt sein, zum Beispiel mittels 3D-Druck gedruckt sein. Bevorzugt wird das Verbindungselement werkzeugfallend hergestellt, das heißt, dass nach der Herstellung keine oder nur zu vernachlässigende Nachbearbeitungen des Bauteils notwendig sind. Dabei sind zumindest die generativ erzeugten Teile aus einem im Wesentlichen identischen Material hergestellt, nicht generative Teile aus einem Material, an das weitere Teile mittels des generativen Verfahrens angebaut werden können.

Wenn das Verbindungselement mittels eines generativen Verfahrens hergestellt wird, werden bei der Herstellung Stützstrukturen generiert, die den Aufbau des Verbindungselements mit seinen Vorsprüngen etc. überhaupt erst ermöglichen. Im Regelfall werden diese Stützstrukturen nach der Fertigstellung entfernt, da sie nicht Bestandteil des Verbindungselements selbst sind und für dessen im Vorfeld berechneten, für die Funktion notwendigen Parameter, wie Festigkeit, Kraftleitung etc. nicht gebraucht werden. Im Falle des Verbindungselements kann es vorteilhaft sein, die Stützstrukturen nicht zu entfernen, sondern zu belassen, da sie geeignet sind, Funktionen zu übernehmen, die für das mit dem Verbindungselement verbundene Bauteil genutzt werden können. So können die Stützstrukturen zum Beispiel bauteilrelevante, wie lasttragende Funktionen übernehmen, wodurch Material an einer anderen Stelle des Bauteils eingespart werden kann.

Das generative hergestellte Verbindungselement ist erfindungsgemäss als Skelettstruktur ausgebildet, um möglichst viel an Gewicht zu sparen. Die Skelettstruktur wird aufgrund von theoretischen Berechnungen und tatsächlichen Messungen hinsichtlich der Kraftflüsse und der notwenigen Festigkeit am Computer optimiert. Das resultierende Programm dient als Steuerprogramm für das generative Verfahren.

Die Losbrechstruktur kann beispielsweise dadurch gebildet sein, dass das erste Verbindungselementteil und das zweite Verbindungselementteil über Stege miteinander verbunden sind, die bei der Überschreitung einer kritischen Last brechen. Eine Alternative ist die Ausbildung der Losbrechstruktur als Fadenstruktur. Diese Fadenstruktur kann in der Sollbruchstelle strahlenförmig die das erste Verbindungselementteil mit dem zweiten Verbindungselementteil verbinden. Die Strahlen müssen die beiden Teilelemente nicht auf dem kürzesten Weg verbinden, sondern können zum Beispiel in einer Ebene gekrümmt sein, wodurch sie der Sollbruchstelle beispielsweise bereits eine Drehrichtung vorgeben können, und/oder aus der Verbindungsebene der beiden Teilelemente heraus gewölbt sein, wodurch die fadenförmige Losbrechstruktur eine dämpfende Wirkung haben kann, dadurch, dass sich die Fäden in einer ersten Phase vor dem Losbrechen erst strecken können und erst im vollständig gestreckten Zustand brechen. Die Fäden können unterschiedliche Längen haben, so dass beim Losbrechen nicht alle Fäden gleichzeitig brechen, sondern Gruppen von Fäden nacheinander, um die dämpfende Wirkung zu verstärken. Schließlich können einige Fäden auch so ausgebildet sein, dass sie im Losbrechfall überhaupt nicht brechen, sondern nach dem Losbrechen die beiden Elementteile mit dem gewonnen zusätzlichen Freiheitsgrad der Bewegung noch zusammenhalten. Eine Losbrechkraft der Fäden oder Fadengruppen kann dadurch eingestellt werden, dass das Materialgefüge der Fäden oder jeder Gruppe von Fäden durch Temperaturvariation beim generativen Herstellen unterschiedlich eingestellt wird. Als Material für die generative Herstellung wird vorzugsweise ein korrosionsbeständiges Material, wie zum Beispiel ein Edelstahl oder eine nicht rostende Metalllegierung verwendet. Auch eine Nachbehandlung des Verbindungselements zur Herstellung oder Verbesserung der Korrosionsbeständigkeit ist möglich, wie beispielsweise eine nachträgliche Lackierung oder Verzinkung.

Wie bereits gesagt, wird durch das Losbrechen der Losbrechstruktur ein zusätzlicher Freiheitsgrad der Bewegung von Teilelementen verwirklicht. Die Losbrechstruktur kann aber auch zum Beispiel nach dem Losbrechen aus einem Viergelenk, zum Beispiel einem Viereck mit jeweils einem Gelenk in einer der vier Ecken, in ein Fünfgelenk generieren, indem eine der Streben, die zwei der Gelenke miteinander verbindet, in einer Losbrechstruktur zwei Teilstreben getrennt wird, wobei die zwei Teilstreben nach dem Losbrechen in einem Gelenk miteinander verbunden sind. Gleiches gilt entsprechend für Zweigelenke, Dreigelenke, Fünfgelenke, Sechsgelenke, etc.

Um die Dämpfung vor, beim und nach dem Losbrechen zu bewirken, kann auch ein Dämpfungselement statt oder zusätzlich zu der entsprechend gestalteten Losbrechstruktur vorgesehen sein. Bei dem Dämpfungselement kann es sich beispielsweise um eine plastisch verformbare Dämpfungsstruktur handeln, die mit dem Verbindungselement oder wenigstens einem der Verbindungselementteile verbunden ist. Die Dämpfungsstruktur kann durch die plastische Verformung insbesondere durch das Freibrechen induzierte Schwingungen des freigebrochenen Teils, respektive einer mit dem freigebrochenen Teil verbundenen Struktur, die sich auf das freigebrochene Teil überträgt, dämpfen und/oder stoppen.

Bevorzugt ist die Verbindung zwischen dem ersten Verbindungselementteil und dem zweiten Verbindungselementteil in der Losbrechstruktur vor dem Losbrechen eine spielfreie Verbindung, die keine relative Bewegung zwischen dem ersten Verbindungselementteil und dem zweiten Verbindungselementteil erlaubt. Dadurch verhalten sich die in der Losbrechstruktur verbundenen Verbindungselementteile vor dem Losbrechen der Losbrechstruktur wie ein einziges Verbindungselement.

Nach dem Losbrechen der Losbrechstruktur, die insbesondere beim Überschreiten eines baulich vorgegebenen Grenzwertes oder beim Auftreten vorgegebener anderer oder weiterer Parameter erfolgt, sind das erste Verbindungselementteil und das zweite Verbindungselementteil bevorzugt noch verliersicher miteinander verbunden. Das heißt, das erste Verbindungselementteil und das zweite Verbindungselementteil können nicht voneinander getrennt, bevorzugt nicht zerstörungsfrei voneinander getrennt werden, so dass zumindest eines der Verbindungselementteile zumindest teilweise zerstört werden muss, um das erste Verbindungselementteil vom zweiten Verbindungselementteil zu trennen. Die Verbindung zwischen dem ersten Verbindungselementteil und dem zweiten Verbindungselementteil besteht bevorzugt weiterhin im Bereich der Losbrechstruktur dadurch, dass die in oder an der Losbrechstruktur verbundenen Verbindungselementteile im Bereich der Losbrechstruktur zum Beispiel weiterhin, wie oben beschrieben, über Fäden verbunden sind und/oder einander hintergreifen oder ineinander verschlungen sind.

Der Umfang der Erfindung umfasst auch verbundene Verbindungselemente mit einer Losbrechstruktur, bei der nach dem Losbrechen der Losbrechstruktur die Verbindungselementteile nicht unmittelbar im Bereich der Losbrechstruktur verbunden sind, sondern in einem Bereich, der von der Losbrechstruktur beabstandet ist.

Bevorzugt ist das Losbrechen der Verbindungselementteile in oder an der Losbrechstruktur unumkehrbar oder irreversibel. Das heißt, nach dem Losbrechen der Losbrechstruktur können die in der Losbrechstruktur voneinander getrennten Verbindungselementteile nicht wieder verbunden werden. Das heißt, das Verbindungselement mit der losgebrochenen Losbrechstruktur muss beispielsweise im Fall einer Reparatur durch ein Verbindungselement mit einer intakten Losbrechstruktur ersetzt werden.

Wie bereits weiter oben angedeutet, kann der durch das Losbrechen gewonnene wenigste eine weitere Freiheitsgrad eine lineare Bewegung oder eine Schwenkbewegung sein. Mehr als ein zusätzlicher Freiheitsgrad der Bewegung kann beispielsweise durch eine kombinierte Linear- und Schwenkbewegung erreicht werden, die nach dem Losbrechen der Losbrechstruktur zwischen dem ersten Verbindungselementteil, dem zweiten Verbindungselementteil, eventuell einem dritten Verbindungselementteil etc. möglich ist.

Insbesondere die Teile des Verbindungselements, die das erste Verbindungselementteil, wenigstens das zweite Verbindungselementteil und die Losbrechstruktur umfassen, die mittels des generativen Verfahrens hergestellt sind, können eine Skelettstruktur aufweisen, mit beispielsweise lokalen Versteifungen und/oder angepassten Wanddicken. Dadurch wird eine Leichtbaustruktur bereitgestellt, bei der möglichst wenig Material verwendet wird, was vorteilhafter Weise in einem niedrigen Gewicht des Verbindungselements resultiert. Die genaue Anordnung der Versteifungen und die optimale Wanddicke können anhand der zu erwartenden Belastungen der Bauteile am Computer errechnet werden. Dadurch können beispielsweise Fachwerkstrukturen gebildet werden, die für eine optimale Kraftübertragung sorgen, innen- oder außenliegende Flächenstrukturen können durch Gitterstrukturen ersetzt werden, Hohlstrukturen, mit oder ohne innere Verstärkungsstreben, können solide Verbindungsknoten ersetzen.

So kann eine individuelle Skelettstruktur für das erste Verbindungselementteil und/oder das wenigstens zweite Verbindungselementteil und die Losbrechstruktur bestimmt werden, die zu erwartende auftretende Lasten optimal aufnimmt, auftretende Spannungen bevorzugt homogen verteilt und den Grenzwert und/oder weitere Parameter zum Aktivieren der Losbrechstruktur zuverlässig bestimmt.

Als weiterer Vorteil kann das mit dem generativen Verfahren zumindest teilweise hergestellte Verbindungselement an jede gegebene Einbausituation besser angepasst werden, als herkömmlich hergestellte Verbindungselemente. So kann vorteilhafter Weise vorhandener Einbauraum besser genutzt werden.

Ein weiterer Vorteil kann sein, dass sich mit dem generativen Verfahren konstruktiv bedingte, aber konventionell oft nicht darstellbare Details, wie Hinterschnitte, Kavitäten und/oder Wandstärkenübergänge frei umsetzen lassen.

Bei mit dem generativen Verfahren hergestellten Verbindungselementen können zudem bereits bei der Konstruktion am Computer weitere Funktionen, wie Führungen für Kabel und/oder Schläuche, Verbindungsstrukturen, Anbindepunkte für zum Beispiel einen Dämpfer, ein Federelement, etc. leicht integriert werden.

Das Verbindungselement kann ferner einen Aktor umfassen, das heißt, es kann mit einem Aktor verbunden sein, der zumindest einen Teil der Kraft zum Losbrechen der Losbrechstruktur bereitstellt. Bei dem Aktor kann es sich insbesondere um ein Federelement, einen Gaskolben oder um Pyrotechnik handeln. Eine Auslösung des Aktors kann von einem oder mehreren Parametern abhängig sein, beispielsweise einer plötzlich auftretenden negativen Beschleunigung, einer Verformung der Umgebung des Aktors oder des Verbindungselements oder eines vom Aktor räumlich entfernten Bauteils einer Anlage oder Karosserieteils eines Fahrzeugs aufgrund von Krafteinwirkung, einem plötzlichen Temperaturanstieg, und anderen Parametern.

Bei dem Verbindungselement kann es sich beispielsweise um ein Scharnier handeln, mit einem ersten Scharnierteil und wenigstens einem zweiten Scharnierteil, die bevorzugt in einem Schwenkgelenk miteinander verbunden sind. Dabei kann das erste Scharnierteil und/oder das zweite Scharnierteil jeweils ein Verbindungselement im vorbeschriebenen Sinn sein. Das erste und/oder das zweite Scharnierteil kann/können zumindest teilweise, bevorzugt vollständig, mittels des generativen Verfahrens hergestellt sein. Ist nur eines der Scharnierteile mittels des generativen Verfahrens hergestellt, so umfasst dieses bevorzugt auch die Losbrechstruktur, die dieses Scharnierteil beim Losbrechen in ein erstes Scharnierunterteil und wenigstens ein zweites Scharnierunterteil trennen kann, so dass nach dem Losbrechen der Losbrechstruktur das erste Scharnierunterteil relativ zu dem zweiten Scharnierunterteil bewegt werden kann, gleichzeitig die beiden Scharnierunterteile aber weiterhin miteinander verbunden, bevorzugt verliersicher verbunden, sind.

Das heißt, im Falle des Scharniers als Verbindungselement kann die Losbrechstruktur nach dem Losbrechen zum Beispiel ein weiteres Schwenkgelenk ausbilden, in dem das erste Verbindungselementteil oder Scharnierunterteil relativ zu dem wenigstens einen zweiten Verbindungselementteil oder Scharnierunterteil verschwenkt werden kann.

Durch die generative Herstellung wenigstens eines der Verbindungselementteile mit der Losbrechstruktur kann vorteilhafter Weise die Anzahl der Einzelteile des Verbindungselements gegenüber bekannten Lösungen reduziert werden. Dies gilt auch, wenn das Verbindungselement zur Unterstützung des Losbrechens der Losbrechstruktur im Lastfall einen Aktor aufweist, wie oben beschrieben wurde.

Die Erfindung ist generell für zahlreiche Anwendungsfälle geeignet und keinesfalls auf das behandelte Scharnier beschränkt. Das erste Bauteil kann beispielsweise eine Wand, eine Anlagen- oder Fahrzeugstruktur, wie beispielsweise eine Fahrzeugkarosserie sein. Das zweite Bauteil kann eine Türe, ein Deckel oder eine Abdeckung sein, die eine Öffnung überdeckt und im Falle eines bestimmten vorgegebenen Lastfalls zusätzlich zur Öffnungs- und Schließbewegung einen weiteren Freiheitsgrad der Bewegung benötigt, um Schaden von Mensch und/oder Maschine abzuwenden.

Eine konkrete Anwendung ist in der Fahrzeugindustrie gegeben. Hier kann das zweite Bauteil zum Beispiel eine Motorhaube eines Fahrzeugs sein, die mit einem Verbindungselement, zum Beispiel dem vorbeschriebenen Scharnier, mit einer Fahrzeugkarosserie schwenkbar verbunden ist. Im Falle eines Unfalls mit einem Fußgänger oder einem Radfahrer, bei dem der Fußgänger oder Radfahrer auf die Motorhaube geschleudert wird, kann durch das Losbrechen der Losbrechstruktur an dem Verbindungselement und den dadurch zusätzlichen Freiheitsgrad der Bewegung im Verbindungselement die Härte des Aufschlags auf der Motorhaube abgefedert und dadurch die Gefahr schwerer Verletzungen insbesondere am Kopf vermindert werden. Dabei bewirkt das Losbrechen der Losbrechstruktur, dass der Aktor die Haube an dem frontscheibenseitigen Ende nach oben bewegt, das heißt, weg von harten Fahrzeugkomponenten, wie beispielsweise einem Längsträger oder der A-Säule. Dieser durch die Auslösung des Aktors hergestellte Abstand ermöglicht vorteilhafterweise ein leichteres und intensiveres plastisches Verformen der aus einem dünnen Blech gebildeten Motorhaube, wodurch die Wucht eines Aufschlags des Unfallgegners auf die Motorhaube abgefedert wird.

Im Folgenden wird die Erfindung anhand eines Ausführungsbeispiels mithilfe von Figuren näher erläutert, ohne dass dadurch die Erfindung auf den dargestellten Gegenstand beschränkt werden soll. Erfindungswesentliche Merkmale, die nur den Figuren entnommen werden können, gehören zum Offenbarungsumfang der Erfindung und können den Gegenstand der Erfindung einzeln oder in Kombination mit anderen Merkmalen vorteilhaft weiterbilden.

Dir Figuren zeigen im Einzelnen:
- Figur 1: Eine beispielhafte Losbrechstruktur in einer vergrößerten Ansicht.
- Figur 2: Losbrechstruktur der Figur 1 nach dem Losbrechen.
- Figur 3: Verbindungselement der Figur 2 in drei Ansichten.
- Figur 4: Verbindungselement der Figur 3 bei geöffneter und geschlossener Motorhaube.
- Figur 5: Verbindungselement der Figur 3 nach dem Losbrechen der Losbrechstruktur.
- Figur 6: Intaktes Verbindungselement in einer Einbausituation.
- Figur 7: Skizzenhafte Darstellung von einem Mehrgelenk vor und nach dem Losbrechen der Losbrechstruktur.
- Figur 8: Skizzenhafte Darstellung eines Verbindungselements mit Fadenelementen.

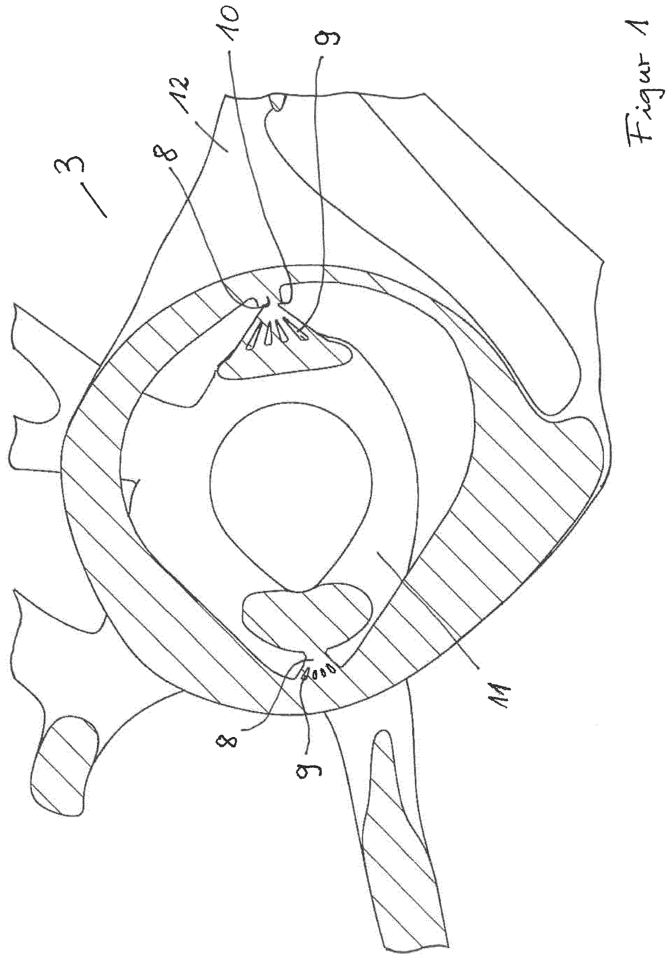

Die Figur 1 zeigt in einer vergrößerten Darstellung eine generativ erzeugte Losbrechstruktur 3 in einer Schnittansicht in einer Mittelebene der Losbrechstruktur 3, die zwei Elemente, im vorliegenden Fall zwei Verbindungsteilelemente 11, 12 spielfrei miteinander verbindet. Die Losbrechstruktur 3 ist im Ausführungsbeispiel stegförmig, wobei die Stege 8 Durchgangsöffnungen 9 oder Materialschwächungen 10 aufweisen, die die Sollbruchstelle der Losbrechstruktur 3 örtlich näher bestimmen und verhindern können, dass das losbrechende Element beim Losbrechen über die Sollbruchstelle 3 hinaus beschädigt wird. Anstatt von Materialschwächungen 10 können örtlich weniger bevorzugt Materialverstärkungen vorgesehen sein, die ebenfalls dazu dienen können, die Losbrechstruktur 3, respektive den tatsächlichen Trennungsbereich zwischen den beiden Verbindungsteilelemente n 11, 12 beim Losbrechen besser zu bestimmen.

Die Losbrechstruktur 3 kann auch anders als stegförmig gebildet sein. Zum Beispiel können die beiden Verbindungsteilelemente 11, 12 über einige oder zahlreiche Fäden an der Sollbruchstelle 3 verbunden sein. Die Fäden können strahlenförmig oder parallel zueinander ausgerichtet sein, oder in anderer Art und Weise.

Die Fäden können als Geraden gebildet sein oder eine Krümmung in einer, zwei oder mehr Ebenen aufweisen. Eine Neigung der Geraden oder eine Richtung der Krümmung kann eine Richtung vorgeben, in die die Sollbruchstelle 3 bevorzugt losbricht. Insbesondere, wenn die Fäden gekrümmt sind, kann das Losbrechen der Losbrechstruktur 3 verzögert werden, dadurch, dass die Fäden sich erst plastisch verformen, zum Beispiel strecken, bevor sie endgültig reisen. Dabei können einzelne Fäden oder Gruppen von Fäden unterschiedliche Strecklänge haben, so dass nicht alle Fäden gleichzeitig reisen, sondern die Fäden oder Gruppen von Fäden nacheinander, was einen Dämpfungseffekt erzeugen kann, der gegenüber einem schlagartigen Losbrechen vorteilhaft sein kann. Es ist auch die Möglichkeit nicht ausgeschlossen, dass beim Losbrechen nicht alle Fäden brechen, sondern die Verbindung der beiden Verbindungsteilelemente 11, 12 nach dem Losbrechen durch noch intakte Fäden aufrechterhalten wird, so dass die Fäden eine Art Verliersicherung zwischen den beiden Verbindungsteilelemente n 11, 12 herstellen.

Die Losbrechstruktur 3 des Ausführungsbeispiels verbindet die beiden Verbindungsteilelemente 11, 12 derart miteinander, dass diese relativ zueinander nicht bewegt werden können. Das heißt, eine lastfreie Bewegung oder eine Bewegung mit einer Last, die unterhalb einer vorgebbaren Grenzwertlast liegt, des ersten oder des zweiten Verbindungsteilelements 11, 12 wird vollständig auf eine Bewegung des zweiten respektive des ersten Verbindungsteilelements 11, 12 übertragen. Die beiden Verbindungsteilelemente 11, 12 bewegen sich wie ein einziges Teil oder Element.

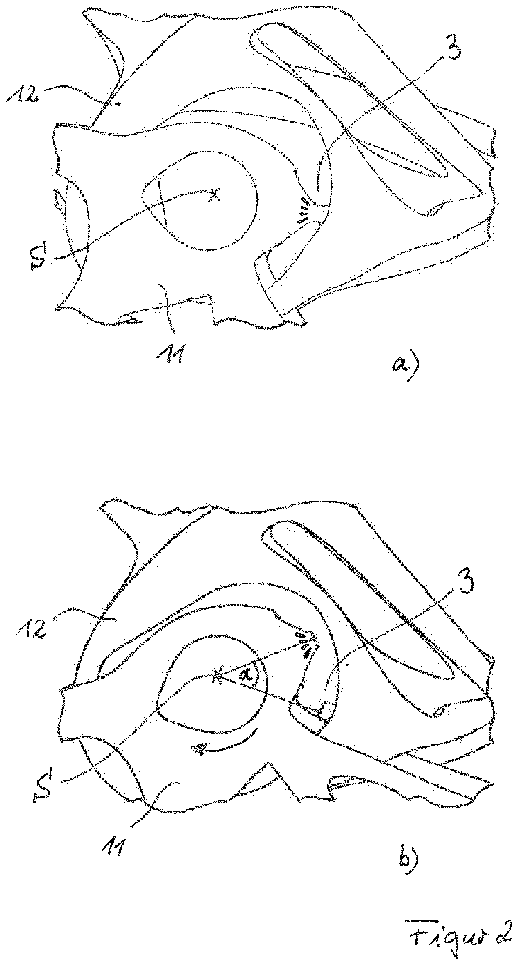

In der Figur 2 ist die Sollbrechstelle 3 der Figur 1 in einer Draufsicht auf die Verbindungsteilelemente 11, 12 gezeigt. In der Darstellung a) ist die Sollbruchstelle 3 noch intakt, das heißt, das erste Verbindungsteilelement 11 und das zweite Verbindungsteilelement 12 sind noch fest miteinander verbunden. Die Darstellung b) zeigt die Sollbruchstelle 3 nach dem Losbrechen der Losbrechstruktur 3 und einer Verdrehung des zweiten Verbindungsteilelements 12 relativ zu dem ersten Verbindungsteilelement 11 in einer Schwenkachse S um den Winkel α.

Das Losbrechen hat bewirkt, dass ein zusätzlicher Freiheitsgrad der Bewegung geschaffen wurde, dadurch dass die vorher starr miteinander verbundenen Verbindungsteilelemente 11, 12 jetzt relativ zueinander verschwenkt werden können. Da beide Verbindungsteilelemente 11, 12 nach dem Losbrechen auch quer zu der Schwenkachse S ein Spiel haben können, ist genau genommen mehr als der genannte Freiheitsgrad an Bewegung gewonnen worden, nämlich zwei oder mehr Freiheitsgrade. Für die reine Lehre soll hier aber von dem Gewinn eines zusätzlichen Freiheitsgrads gesprochen werden, da der oder die anderen gewonnen Freiheitsgrade bei der Sollbruchstelle 3 des Ausführungsbeispiels vernachlässigbar sind.

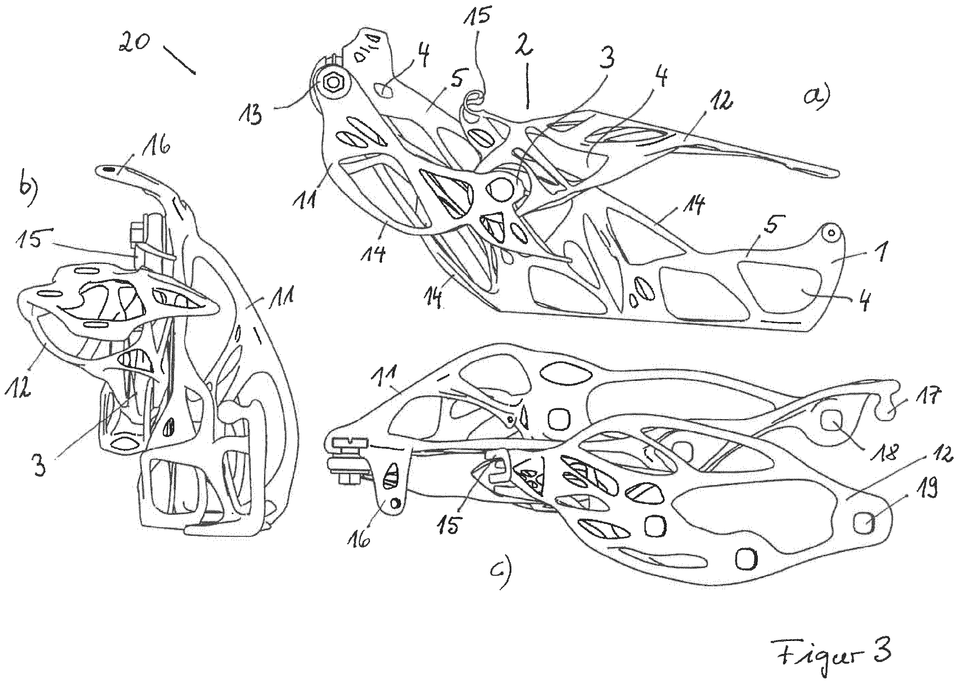

Die Figur 3 zeigt ein Scharnier 20, das aus einem ersten generativ hergestellten Verbindungselement 1 besteht, das mit einem nicht gezeigten ersten Bauteil 100 verbunden werden kann, und einem zweiten generativ hergestellten Verbindungselement 2, das mit einem zweiten nicht gezeigten Bauteil 200 verbunden werden kann in drei Standardansichten. Das erste Verbindungselement 1 und das zweite Verbindungselement 2 sind in einem konventionellen Schwenkgelenk 13 miteinander verbunden. Das Schwenkgelenk 13 kann alternativ auch mittels eines generativen Verfahrens hergestellt sein, so dass das Scharnier 20 insgesamt generativ in einem Arbeitsgang erzeugt werden kann.

Das zweite Verbindungselement 2 umfasst zwei Verbindungselementteile 11, 12, die in einer Sollbruchstelle 3 miteinander verbunden sind. Die Sollbruchstelle 3 ist noch intakt, so dass bei einem Verschwenken des zweiten Verbindungselements 2 im Schwenkgelenk 13 die beiden Verbindungselementteile 11, 12 gemeinsam bewegt werden.

Das erste und das zweite Verbindungselementteil 11, 12 sind mittels eine generativen Verfahrens, wie zum Beispiel 3D-Druck, einem anderen Schichtbauverfahren, einem Pulverbettverfahren, einem Freiraumverfahren oder einem Flüssigmaterialverfahren hergestellt. Die Verbindungselementteile 11, 12 habe eine skelettartige Struktur, die zum Beispiel bezüglich der zu erwartenden Kraftflüsse, Kraftübertragung und der notwendigen punktuellen Festigkeit vor der Produktion am Computer ausgelegt und optimiert wurde. Die Struktur weist zahlreiche Ausnehmungen oder lokale Vertiefungen 4 auf, Streben 14 mit örtlich unterschiedlicher Wanddicke 5, mit Versteifungen, oder sie kann Hohlstrukturen oder andere Strukturen zur Skelettbildung aufweisen. Flächige Bereich können zum Beispiel durch Gitterstrukturen ersetzt werden, was Materialeinsparungen ermöglicht, die das Gewicht der Struktur vermindert, Kompakte Knotenstrukturen können durch Hohlstrukturen ersetzt werden, die im Inneren Verstärkungsstreben aufweisen können, zum Beispiel eine wabenförmige Verstärkungsstruktur, um die notwendige Festigkeit herzustellen.

Die Abbildung a) zeigt eine Seitenansicht des Scharniers 20 in der Einbausituation. Die Abbildung b) zeigt eine Frontansicht des Scharniers 20 von der dem Schwenkgelenk 13 abgewandten Stirnseite des Scharniers 20, und die Abbildung c) eine Draufsicht, in der man die Anbindepunkte 18 des ersten Verbindungselements 1 zum Verbinden mit einem ersten Bauteil 100 und die Anbindepunkte 19 des zweiten Verbindungselements 2 zum Verbinden mit einem zweiten Bauteil 200 sieht.

In der Abbildung a) ist am Scharnier am zweiten Verbindungselementteil 12 eine Art Klemme 15 zu sehen, in die beispielsweise eine Zuleitung für Spritzwasser oder eine Kabel geklemmt werden kann. Diese Klemme 15 ist nur beispielhaft, natürlich können an unterschiedlichsten Stellen des Scharniers 20 gleiche oder ähnliche Klemmen 15 angebracht sein. Dass die Klemme 15 am zweiten Verbindungselementteil 12 gebildet ist, bedeutet, dass sich die Position beim Losbrechen der Sollbruchstelle 3 relativ zu der Umgebung verändert. Dies bedeutet, dass die Leitung/das Kabel ausgebildet sein müssen, um diese Bewegung mitzumachen, oder dass die Leitung/das Kabel eine Kupplung hat, die ein kontrolliertes Abtrennen der Leitung/des Kabels beim oder nach dem Losbrechen der Losbrechstruktur 3 ermöglicht.

In der Abbildung b) ist eine von oder an dem ersten Verbindungselementteil 11 gebildeter Anschlag 16 zu sehen, durch den eine Schwenkbewegung des zweiten Verbindungselementteils 12 relativ zum ersten Verbindungselementteil 11 gegen den Uhrzeigersinn begrenzt wird. Auch bei einem Verschwenken des zweiten Verbindungselementteils 12 im Uhrzeigersinn kann der Schwenkwinkel durch einen Anschlag begrenzt sein. Bevorzug ist er aber durch die Formgebung des ersten und des zweiten Verbindungselementteils 1, 2 vorgegeben.

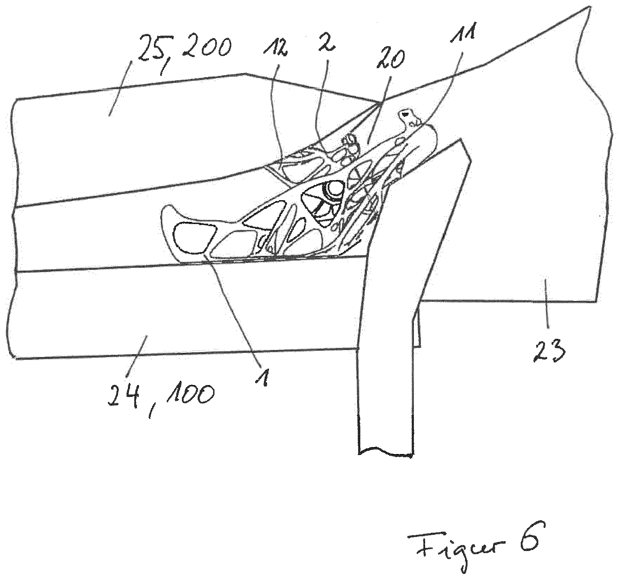

Die Abbildung c) zeigt neben den Anbindepunkten 18, 19 für das erste Bauteil 100 (Figur 6) und das zweite Bauteil 200 (Figur 6) weiterhin ein Verbindungselement 17 am ersten Verbindungsteil 1, mit dem beispielsweise eine Feder, ein Sensor oder ein anderes Anbauteil verbunden werden kann. Auch hier gilt, dass natürlich mehrere solcher oder ähnlicher Verbindungselemente 17 am ersten Verbindungselement 1 und/oder am zweiten Verbindungselement 2 ausgebildet sein können.

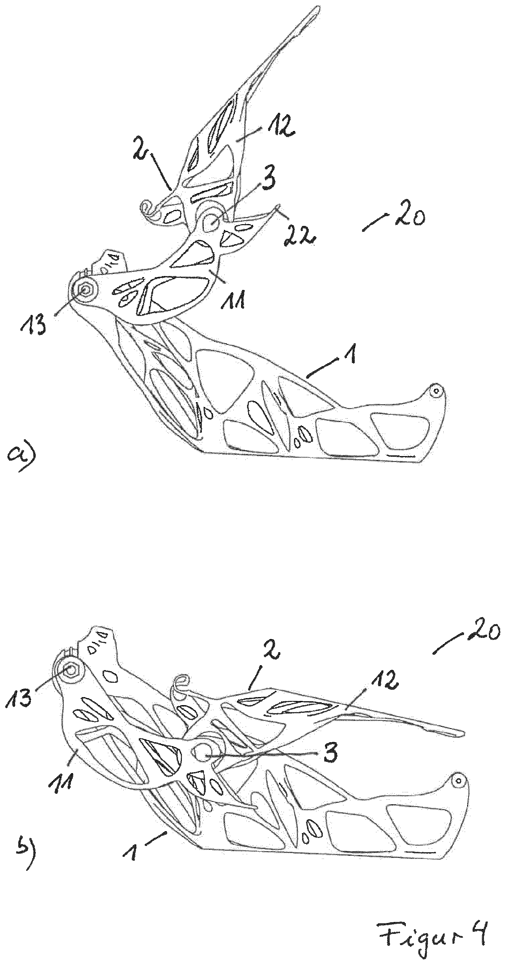

Die Figur 4 zeigt das Scharnier 20 der Figur 3 in der Abbildung a) in einer Position, in der das zweite Bauteil 200 in einer ersten Position ist, zum Beispiel eine nicht gezeigte Motorhaube 25 (Figur 6) geöffnet ist, um beispielsweise Wasser für die Scheibenwaschanlage nachzufüllen. Das zweite Verbindungselement 2 wurde in dem Schwenkgelenk 13 gegen den Uhrzeigersinn bewegt, bis es die gezeigte Stellung einnimmt, in der zum Beispiel die Motorhaube 25 geöffnet und in der offenen Stellung gesichert ist. In dieser Stellung kann das zweite Verbindungselement 2 an einem den Schwenkwinkel begrenzende Anschlag 16 (Figur 3c) an dem ersten Verbindungelement 1 in Anlage sein.

In der Abbildung b) ist das Scharnier 20 in einer Grundstellung, in der das zweite Bauteil 200 eine zweite, zu ersten Position unterschiedliche Position einnimmt, die Motorhaube 25 zum Beispiel geschlossen ist.

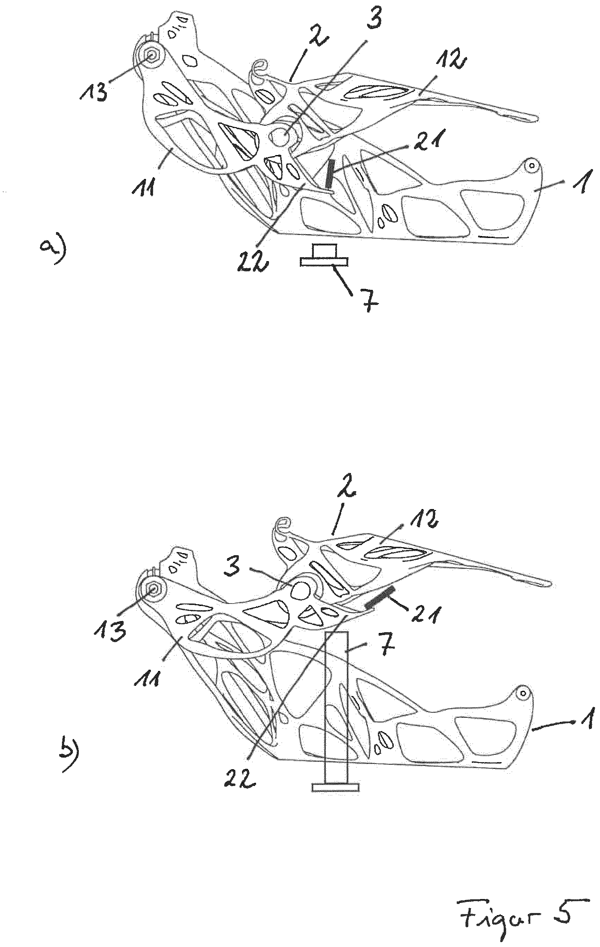

Die Figur 5 zeigt das Scharnier in der Abbildung a) in der Grundstellung, die der Grundstellung in der Abbildung b) der Figur 3 entspricht, und in der Abbildung b) nach dem Losbrechen der Losbrechstruktur 3 durch den Aktor 7.

In der Abbildung a) ist der Aktor 7 unterhalb der Nase 22 angeordnet. Mit der Nase 22 respektive der vom Aktor 7 wegweisenden Oberseite der Nase 22 ist ein Dämpfungselement 21 verbunden. Der Aktor 7 ist in Ruhe, das heißt, nicht ausgelöst oder aktiv.

In der Abbildung b) wurde der Aktor 7 ausgelöst, hat gegen die ihm zugewandte Unterseite der Nase 22 geschlagen und dadurch das erste Verbindungselementteil 11 und das zweite Verbindungselementteil 12 an der Sollbruchstelle soweit getrennt, dass jetzt das erste Verbindungselementteil 11 relativ zu dem zweiten Verbindungselementteil 12 nach oben verschwenkt werden kann. Der Aktor 7 kann im Folgenden als Dämpfer wirken, wenn das zweite Verbindungselementteil 12 durch eine auf das zweite Bauteil 200, das mit der Oberseite des zweiten Verbindungselementteils 12 verbunden ist, wirkende Kraft das zweite Verbindungselementteil 12 wieder nach unten drückt.

Bei dem Aktor 7 kann es sich um ein Federelement, einen zum Beispiel mit Gas angetrieben Kolben oder um Pyrotechnik handeln, die schlagartig direkt auf die Sollbruchstelle 3 oder auf das erste oder zweite Verbindungselementteil 11, 12 mit einer Kraft einwirken, die größer ist, als eine konstruktiv vorgegebene Sollbruchkraft für die Losbrechstruktur 3. Der Aktor 7 kann nach dem Losbrechen der Losbrechstruktur 3 einen Dämpfer 21 bilden oder eine Dämpfungsfunktion übernehmen, die zumindest erste Schwingungen des mit dem zweiten Verbindungselementteil 12 verbundenen Bauteils 200 dämpft. Der Aktor 7 kann das einzige Dämpfungselement der Anordnung sein.

Das zweite Verbindungselementteil 12 ist mit dem ersten Verbindungselementteil 11 nach dem Losbrechen noch verliersicher verbunden, indem das ersten Verbindungselementteil 11 im Bereich der Sollbruchstelle 3 eine Öffnung des zweiten Verbindungselementteils 12 durchgreift und die Nase 22 ausbildet, die den Anschlag für den Aktor 7 bildet, auf den der aktivierte Aktor 7 einwirkt, um die Losbrechstruktur 3 loszubrechen.

Im gezeigten Ausführungsbeispiel ist mit der Nase 22 das Dämpfungselement 21 verbunden, das eine Schwingung des Bauteils 200, das mit dem zweiten Verbindungselementteil 12 verbunden ist, exklusiv oder zusätzlich zu dem Aktor 7 dämpfen kann. Bei dem Dämpfungselement 21 kann es sich beispielsweise um einen plastisch verformbaren Festkörper, Beispiel einen Kunststoff, eine Strebe oder einen Hohlkörper handeln, oder ein anderes bekanntes Dämpfungselement 21. Das Dämpfungselement 21 kann durch die plastische Verformung oder die Belastung zum Beispiel verbogen, zusammengedrückt, gedehnt, verdreht, geknickt oder abgeschoren werden.

Das Dämpfungselement 21 kann gemeinsam mit dem Verbindungselement 1, 2 oder Verbindungselementteil 11, 12 im generativen Verfahren erzeugt sein, oder es kann ein separates Bauteil sein, das separat hergestellt oder eingekauft und mit dem Verbindungselement 1, 2 oder Verbindungselementteil 11, 12 gefügt wird. Statt des einen gezeigten Dämpfungselements 21 können zwei, drei oder mehr Dämpfungselemente 21 nahe beieinander oder verteilt über das Verbindungselement 1, 2 und/oder das Verbindungselementteil 11, 12 angeordnet sein. Schließlich kann oder können ein oder mehrere Dämpfungselemente 21 am dem ersten Verbindungselementteil 11, das in dem Schwenkgelenk 13 mit dem ersten Verbindungselement 1 verbunden ist, angeordnet sein und oder an dem ersten Verbindungselement 1. Schließlich kann auch ein von dem Scharnier 20 unabhängiges Dämpfungselement bevorzugt in der Nähe des Scharniers 20 das erste Bauteil 100 direkt mit dem zweiten Bauteil 200 verbinden oder vom ersten oder zweiten Bauteil 100, 200 in Richtung des zweiten oder ersten Bauteils 200, 100 vorstehen.

Das zweite Verbindungselementteil 12, respektive die Verbindungsfläche zum Verbinden mit dem zweiten Bauteil 200 liegt in der Abbildung b) deutlich oberhalb des Schwenkgelenks 13, in der das erste Verbindungselement 1 und das zweite Verbindungselement 2 verbunden sind. Dies kann eine Endposition zeigen, in die das zweite Verbindungselementteil 12 durch den Aktor 7 bewegt wurde, oder die Endposition, die das zweite Verbindungselementteil 12 einnimmt, wenn sich das System nach dem Losbrechen der Losbrechstruktur 3 wieder beruhigt hat, die eventuellen Schwingungen abgeklungen sind und das erste Bauteil 100 und das zweiten Bauteil 200 in Ruhe sind.

In der Figur 6 ist am Beispiel eines Fahrzeuges eine beispielhafte Einsatzmöglichkeit des in den Figuren 1 bis 4 gezeigten Scharniers 20 zu sehen. Die Figur 5 zeigt skizzenhaft einen Frontbereich eines Kfz mit einer A-Säule 23, einem Längsträger 24 und einer Motorhaube 25. Das Scharnier 20 ist mit dem ersten Verbindungselement 1 mit dem Längsträger 24 oder dem ersten Bauteil 100 verbunden, das zweite Verbindungselement 2 liegt an einer Unterseite der Kofferraumhaube 25 oder des zweiten Bauteils 200 an, die Motorhaube 25 ist geschlossen. Kommt es jetzt zu einem Unfall, bei dem ein Fußgänger oder Zweiradfahrer auf die Motorhaube 25 geschleudert werden kann, wird der Aktor 7 ausgelöst, so dass die Motorhaube 25 von der A-Säule 23 weg bewegt wird, bevor der Unfallgegner auf der Motorhaube 25 aufschlägt. Dadurch wird eine Situation geschaffen, in der sich die Motorhaube 25 leichter plastisch verformen kann, wodurch ein Teil der Aufprallenergie absorbiert oder umgewandelt werden kann. Zusätzlich kann sich die Motorhaube im Bereich des Scharniers 20 wieder in Richtung der A-Säule 23 bewegen, was zusätzlich Aufprallenergie absorbiert oder umwandelt. Durch das Vorsehen eines oder mehrerer Dämpfungselemente 21, wie beispielsweise dem Aktor 7 und/oder plastisch verformbaren Dämpfungskörpern an wenigstens einem der Verbindungselemente 1, 2 oder Verbindungselementteile 11, 12 kann ein Schwingen der Motorhaube 25 aufgrund des Energieeintrags durch den Aktor 7 reduziert und nach möglichst kurzer Zeit unterbunden werden.

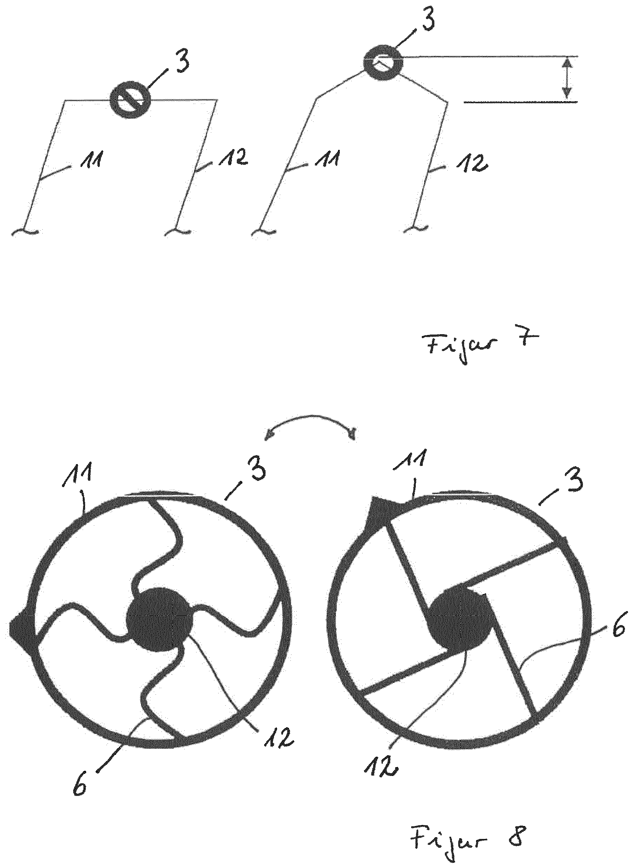

In der Figur 7 ist skizzenhaft ein beispielhaftes Mehrgelenk mit den Elementen 11, 12 gezeigt, dass eine Sollbruchstelle 3 aufweist. Die linke Abbildung zeigt das Mehrgelenk mit der intakten Sollbruchstelle 3, die rechte Abbildung zeigt dasselbe Mehrgelenk nach dem Losbrechen der Losbrechstruktur 3. Im gezeigten Mehrgelenk kann nach dem Losbrechen der Losbrechstruktur 3 das in der rechten Abbildung geschlossene Ende des Mehrgelenks nach außen bewegt werden. Möglich wäre auch eine Bewegung in die entgegengesetzte Richtung.

Die Figur 8 zeigt in zwei Skizzen mögliche Ausführungen eine Losbrechstruktur 3 mit Fäden 6 als Losbrechelemente. In der linken Abbildung sind die Fäden S-förmig ausgebildet, so dass sich die Fäden zunächst strecken können, ohne abzureisen, um einen zusätzlichen Freiheitsgrad der Bewegung von wenigstens zwei in der Losbrechstruktur 3 verbundenen Elementen 11, 12 zu ermöglichen. Dies kann vorteilhafterweise einen Dämpfungseffekt in der Losbrechstruktur 3 vor dem Losbrechen beim Dehnen der Fäden 6 bewirken. Einer, mehrere oder alle Fäden 6 können im weiteren Verlauf reißen, oder die Elemente 11, 12 bleiben auch nach dem Losbrechen der Losbrechstruktur 3 über einen oder mehrere oder alle Fäden 6 weiterhin verliersicher verbunden.

In der rechten Abbildung sind die Losbrechelemente ebenfalls als Fäden 6 ausgebildet. Die Verbindung der Fäden 6 mit den Elementen 11, 12 ist in dieser Abbildung so gewählt, dass der Sollbruchstelle 3 eine Trennrichtung quasi vorgegeben ist. Im gezeigten Ausführungsbeispiel führt eine Drehung im Uhrzeigersinn zu einem schnelle Abreisen der Fäden 6, bei einer Drehung gegen den Uhrzeigersinn kann es dagegen zumindest in einer ersten Losbrechphase zu einer Verformung der Fäden 6 kommen, was wiederum eine dämpfende Wirkung haben kann. Ein späteres Reißen einer, mehrere oder aller Fäden 6 ist möglich, ebenso das Aufrechterhalten der verliersicheren Verbindung zwischen den beiden Elementen 11, 12 in einem, mehreren oder allen Fäden 6.

### Bezugszeichenliste

- 1: Verbindungselement
- 2: Verbindungselement
- 3: Losbrechstruktur, Sollbruchstelle
- 4: lokale Vertiefung
- 5: Wanddicke
- 6: Faden
- 7: Aktor
- 8: Steg
- 9: Durchgangsöffnung
- 10: Materialschwächung
- 11: Verbindungselementteil, Element
- 12: Verbindungselementteil, Element
- 13: Schwenkgelenk
- 14: Strebe
- 15: Klemme
- 16: Anschlag
- 17: Verbindungselement
- 18: Anbindepunkt
- 19: Anbindepunkt
- 20: Scharnier
- 21: Dämpfer, Dämpfungselement
- 22: Nase
- 23: A-Säule
- 24: Längsträger
- 25: Motorhaube
- 100: Bauteil
- 200: Bauteil
- S: Schwenkachse
- α: Schwenkwinkel

## Patentansprüche

1. Verbindungselement zum Verbinden eines ersten Bauteils (100) mit wenigstens einem zweiten Bauteil (200), wobei das Verbindungselement (2) ein erstes Verbindungselementteil (11) und wenigstens ein zweites Verbindungselementteil (12) umfasst,
das erste Verbindungselementteil (11) und das zweite Verbindungselementteil (12) in wenigstens einer Losbrechstruktur (3) miteinander verbunden sind, wobei die Losbrechstruktur (3) mit einem generativen Verfahren, wie beispielsweise 3D-Druck oder Lasersintern, hergestellt ist,
wobei das erste Verbindungselementteil (11) und/oder das zweite Verbindungselementteil (12) mit einem generativen Verfahren hergestellt sind, vorzugsweise mit demselben generativen Verfahren, wie die Losbrechstruktur (3), und
wobei das im generativen Verfahren hergestellte Verbindungselementteil (11, 12) eine Skelettstruktur aufweist.

2. Verbindungselement nach Anspruch 1, wobei die Losbrechstruktur (3) hergerichtet ist, bei einer Belastung oberhalb eines bevorzugt vorgebbaren Grenzwerts loszubrechen und unter Beibehaltung einer Verbindung zwischen den Bauteilen (100, 200) einen zusätzlichen Freiheitsgrad der Bewegung des Verbindungselements (2) freizugeben.

3. Verbindungselement nach einem der vorhergehenden Ansprüche, wobei die Losbrechstruktur (3) vor dem Losbrechen eine im Wesentlichen spielfreie Verbindung zwischen dem ersten Verbindungselementteil (11) und dem zweiten Verbindungselementteil (12) bildet.

4. Verbindungselement nach einem der vorhergehenden Ansprüche, wobei das Verbindungselement (2) und die Losbrechstruktur (3) gemeinsam mit dem generativen Verfahren hergestellt sind.

5. Verbindungselement nach einem der vorhergehenden Ansprüche, wobei das erste Verbindungselementteil (11) und das zweite Verbindungselementteil (12) nach dem Losbrechen der Losbrechstruktur (3) verliersicher miteinander verbunden sind.

6. Verbindungselement nach einem der vorhergehenden Ansprüche, wobei das Losbrechen der Losbrechstruktur (3) irreversibel ist.

7. Verbindungselement nach einem der vorhergehenden Ansprüche, ferner umfassend einen Aktor (7), der zumindest einen Teil der Kraft zum Losbrechen der Losbrechstruktur (3) bereitstellt, wobei es sich bei dem Aktor (7) zum Beispiel um ein Federelement, einen Gaskolben oder Pyrotechnik handeln kann.

8. Verbindungselement nach einem der vorhergehenden Ansprüche, wobei das erste Bauteil eine Wand, eine Anlagen- oder Fahrzeugstruktur, wie beispielsweise eine Fahrzeugkarosserie, ist.

9. Verbindungselement nach einem der vorhergehenden Ansprüche, wobei das wenigstens eine zweite Bauteil (200) beispielsweise eine Tür, ein Deckel oder eine Abdeckung, beispielsweise eine Motorhaube 25 eines Kfz ist.

10. Verbindungselement nach einem der vorhergehenden Ansprüche, wobei Stützstrukturen, die bei der generativen Herstellung der Losbrechstruktur (3) und/oder des ersten Verbindungselementteils (11) und/oder des zweiten Verbindungselementteils (12) erzeugt werden, zumindest teilweise belassen werden. (Seite 4)

11. Verbindungselement nach einem der vorhergehenden Ansprüche, wobei die Losbrechstruktur und/oder das erste Verbindungselementteil (11) und/oder das zweite Verbindungselementteil (12) eine Dämpfungsstruktur umfasst/umfassen oder mit einem Dämpfungselement verbunden ist/sind.(Seite 5)

12. Verbindungselement nach einem der vorhergehenden Ansprüche, wobei am mit dem generativen Verfahren hergestellten ersten Verbindungselementteil (11) und/oder zweiten Verbindungselementteil (12) weitere Funktionen, wie Führungen für Kabel und/oder Schläuche, Verbindungsstrukturen, Anbindepunkte für beispielsweise einen Dämpfer oder ein Federelement, etc. integriert sind. (Seite 8)

13. Verbindungselement nach einem der vorhergehenden Ansprüche, wobei eine Losbrechstruktur (3) mehr als zwei Verbindungselementteile (11, 12) miteinander verbindet oder zwei oder mehr als zwei Verbindungselementteile (11, 12) in mehr als einer Losbrechstruktur (3) miteinander verbunden sind. (Seite 2)

## Claims

1. Connecting element for connecting a first component (100) to at least one second component (200), wherein the connecting element (2) comprises a first connecting element part (11) and at least one second connecting element part (12),
the first connecting element part (11) and the second connecting element part (12) are connected to one another in at least one breakaway structure (3),
wherein the breakaway structure (3) is produced using a generative manufacturing process, such as by way of example 3D printing or laser sintering,
wherein the first connecting element part (11) and/or the second connecting element part (12) are produced using a generative manufacturing process, preferably using the same generative manufacturing process as the breakaway structure (3), and
wherein the connecting element part (11, 12) that is produced in the generative manufacturing process comprises a skeleton structure.

2. Connecting element according to Claim 1, wherein the breakaway structure (3) is configured so as to breakaway in the case of a load above a preferred threshold value that can be preset and to release an additional degree of freedom of the movement of the connecting element (2) while maintaining a connection between the components (100, 200).

3. Connecting element according to one of the preceding claims, wherein the breakaway structure (3) forms an essentially play-free connection between the first connecting element part (11) and the second connecting element part (12) prior to breaking away.

4. Connecting element according to one of the preceding claims, wherein the connecting element (2) and the breakaway structure (3) are produced together using the generative manufacturing process.

5. Connecting element according to one of the preceding claims, wherein the first connecting element part (11) and the second connecting element part (12) remain connected to one another in a loss-proof manner after the breakaway of the breakaway structure (3).

6. Connecting element according to one of the preceding claims, wherein the breakaway of the breakaway structure (3) is irreversible.

7. Connecting element according to one of the preceding claims, further comprising an actuator (7) that provides at least a part of the force for the breakaway of the breakaway structure (3), wherein the actuator (7) is for example a resilient element, a gas piston or a pyrotechnic element.

8. Connecting element according to one of the preceding claims, wherein the first component is a wall, an installation structure or vehicle structure such as by way of example a vehicle body.

9. Connecting element according to one of the preceding claims, wherein the at least one second component (200) is by way of example a door, a lid or a cover, by way of example a bonnet 25 of a motor vehicle.

10. Connecting element according to one of the preceding claims, wherein supporting structures that are created during the generative manufacturing process of the breakaway structure (3) and/or of the first connecting element part (11) and/or of the second connecting element part (12) are at least in part retained. (Page 4)

11. Connecting element according to one of the preceding claims, wherein the breakaway structure and/or the first connecting element part (11) and/or the second connecting element part (12) comprises/comprise an attenuation structure or is/are connected to an attenuation element. (Page 5).

12. Connecting element according to one of the preceding claims, wherein further functions such as guiding arrangements for cables and/or hoses, connecting structures, fixing points for by way of example an attenuator or a resilient element, etc. are integrated on the first connected element part (11) and/or second connecting element part (12) that are produced using the generative manufacturing process. (Page 8)

13. Connecting element according to one of the preceding claims, wherein a breakaway structure (3) connects more than two connecting element parts (11, 12) to one another or two or more than two connecting element parts (11, 12) to one another in more than one breakaway structure (3). (Page 2)

## Revendications

1. Élément de liaison destiné à relier un premier composant (100) à au moins un deuxième composant (200), dans lequel l'élément de liaison (2) comprend une première partie d'élément de liaison (11) et au moins une deuxième partie d'élément de liaison (12),
la première partie d'élément de liaison (11) et la deuxième partie d'élément de liaison (12) sont reliées l'une à l'autre dans au moins une structure de rupture (3),
dans lequel la structure de rupture (3) est fabriquée avec un procédé additif, tel que par exemple une impression 3D ou un frittage par laser,
dans lequel la première partie d'élément de liaison (11) et/ou la deuxième partie d'élément de liaison (12) sont fabriquées avec un procédé additif, de préférence avec le même procédé additif que la structure de rupture (3), et
dans lequel la partie d'élément de liaison (11, 12) fabriquée dans le procédé additif présente une structure de squelette.

2. Élément de liaison selon la revendication 1, dans lequel la structure de rupture (3) est agencée pour se rompre en cas de charge supérieure à une valeur limite qui peut de préférence être prédéfinie et pour libérer un degré de liberté supplémentaire dans le mouvement de l'élément de liaison (2) tout en maintenant une liaison entre les composants (100, 200) .

3. Élément de liaison selon une des revendications précédentes, dans lequel la structure de rupture (3) forme avant la rupture une liaison sensiblement sans jeu entre la première partie d'élément de liaison (11) et la deuxième partie d'élément de liaison (12).

4. Élément de liaison selon une des revendications précédentes, dans lequel l'élément de liaison (2) et la structure de rupture (3) sont fabriqués conjointement avec le procédé additif.

5. Élément de liaison selon une des revendications précédentes, dans lequel, après la rupture de la structure de rupture (3), la première partie d'élément de liaison (11) et la deuxième partie d'élément de liaison (12) sont reliées l'une à l'autre de manière imperdable.

6. Élément de liaison selon une des revendications précédentes, dans lequel la rupture de la structure de rupture (3) est irréversible.

7. Élément de liaison selon une des revendications précédentes, comprenant en outre un actionneur (7) qui fournit au moins une partie de la force de rupture de la structure de rupture (3), dans lequel l'actionneur (7) peut être par exemple un élément de ressort, un vérin à gaz ou un moyen pyrotechnique.

8. Élément de liaison selon une des revendications précédentes, dans lequel le premier composant est une paroi, une structure d'installation ou de véhicule, telle que par exemple une carrosserie de véhicule.

9. Élément de liaison selon une des revendications précédentes, dans lequel l'au moins un deuxième composant (200) est par exemple une porte, un couvercle ou un cache, par exemple un capot 25 d'un véhicule automobile.

10. Élément de liaison selon une des revendications précédentes, dans lequel des structures d'appui, qui sont produites par la fabrication additive de la structure de rupture (3) et/ou de la première partie d'élément de liaison (11) et/ou de la deuxième partie d'élément de liaison (12), sont laissées au moins en partie.

11. Élément de liaison selon une des revendications précédentes, dans lequel la structure de rupture et/ou la première partie d'élément de liaison (11) et/ou la deuxième partie d'élément de liaison (12) comprend/comprennent une structure d'amortissement ou est/sont reliée(s) à un élément d'amortissement.

12. Élément de liaison selon une des revendications précédentes, dans lequel d'autres fonctions, tels que des guidages de câbles et/ou de flexibles, des structures de liaison, des points de fixation, par exemple pour un amortisseur ou un élément de ressort, etc., sont intégrés au niveau de la première partie d'élément de liaison (11) et/ou la deuxième partie d'élément de liaison (12) fabriquée(s) avec le procédé additif.

13. Élément de liaison selon une des revendications précédentes, dans lequel une structure de rupture (3) relie plus de deux parties d'élément de liaison (11, 12) les unes aux autres, ou deux ou plus de deux parties d'élément de liaison (11, 12) sont reliées les unes aux autres dans plus d'une structure de rupture (3).
